# EUROPÄISCHE PATENTANMELDUNG

(11) **EP 2 213 952 A2**
(43) Veröffentlichungstag der Anmeldung: **04.08.2010**
(21) Anmeldenummer: 10150435.5
(22) Anmeldetag: 11.01.2010
(51) Int. Cl.: F24D 19/10

(54) **Solarheizanlage, Verfahren und Vorrichtung zur Diagnose einer Luftmenge in einem mit einem Solarlfuid befüllten Solarfluidkreis und zum Betreiben einer Solarheizanlage**

(30) Priorität: 29.01.2009 DE 102009006722
(71) Anmelder: Robert Bosch GmbH, 70442 Stuttgart (DE)
(72) Erfinder: Oertel, Kai, 70569 Stuttgart (DE); Stumpp, Hermann, 73730 Esslingen (DE)

(57) **Zusammenfassung**

Die Erfindung betrifft ein Verfahren und eine Vorrichtung zu Diagnose einer Luftmenge in einem mit einem Solarfluid (F) befüllten Solarfluidkreis (K) mit Solarkollektor (4), insbesondere in einem Solarfluidkreis (K) einer Solarheizanlage (1). Weiter betrifft die Erfindung ein zum Betreiben einer Solarheizanlage (1), bei welcher ein durch einen Solarfluidkreis (K) mittels einer Fördereinrichtung (12) gefördertes Solarfluid (F) über mindestens einen Solarkollektor (4) erwärmt wird. Auch betrifft die Erfindung. eine Vorrichtung (10) zum Befüllen einer Solarheizanlage (1), bei welcher ein durch einen Solarfluidkreis (K) mittels einer Fördereinrichtung(12) gefördertes Solarfluid (F) über mindestens einen Solarkollektor (4) erwärmt wird, sowie eine Solarheizanlage (1).

Es ist eine Aufgabe der Erfindung, eine verbesserte Vorrichtung und ein verbessertes Verfahren zur fehlerfreien Diagnose und somit sicheren Vermeidung von Luft im Solarsystem bei der Inbetriebnahme zu schaffen.

Gekennzeichnet sind die Verfahren und die Vorrichtung (10) sowie die Solarheizanlage (1) dadurch, dass der Beginn eines Überströmens des Solarfluids (F) über den Hochpunkt erfasst wird und eine Drehzahl und/oder eine Leistungsaufnahme der Fördereinrichtung (12) erfasst und in Bezug auf ihre Restförderhöhe ausgewertet wird, um aus der zum Erzeugen des beginnenden Überströmens erforderlichen Drehzahl und/oder Leistungsaufnahme die in dem Solarfluidkreis (K) vorhandene Luftmenge zu diagnostizieren.

## Beschreibung

Die Erfindung betrifft ein Verfahren zur Diagnose einer Luftmenge in einem mit einem Solarfluid befüllten Solarfluidkreis mit Solarkollektor, insbesondere in einem Solarfluidkreis einer Solarheizanlage, nach dem Oberbegriff des Patentanspruches 1.

Weiter betrifft die Erfindung ein Verfahren zum Betreiben einer Solarheizanlage, bei welcher ein durch einen Solarfluidkreis mittels einer Fördereinrichtung gefördertes Solarfluid über mindestens einen Solarkollektor erwärmt wird, nach dem Oberbegriff des Anspruchs 3.

Zudem betrifft die Erfindung eine Vorrichtung zur Diagnose einer Luftmenge in einem mit einem Solarfluid befüllten Solarfluidkreis mit Solarkollektor, insbesondere in einem Solarfluidkreis einer Solarheizanlage, und mit einer regelbaren Fördereinrichtung, um das Solarfluid durch eine Steigleitung und eine Fallleitung des Solarfluidkreises zu fördern, nach dem Oberbegriff des Anspruchs 8.

Auch betrifft die Erfindung eine Vorrichtung zum Befüllen einer Solarheizanlage, bei welcher ein durch einen Solarfluidkreis mittels einer Fördereinrichtung gefördertes Solarfluid über mindestens einen Solarkollektor erwärmt wird, nach dem Oberbegriff des Anspruchs 9.

Nicht zuletzt betrifft die Erfindung auch eine Solarheizanlage, bei welcher ein durch einen Solarfluidkreis mittels einer Fördereinrichtung gefördertes Solarfluid über mindestens einen Solarkollektor erwärmt wird, nach dem Oberbegriff des Anspruchs 10.

Solarheizanlagen zum Heizen von Trinkwasser sind aus dem Stand der Technik bekannt. Derartige Solarheizanlagen verfügen über einen Solarheizkreis, durch den ein Solarfluid mittels einer Fördereinrichtung wie einer Pumpe gefördert wird. Das Solarfluid wird durch einen in den Solarheizkreis integrierten Solarkollektor gefördert. Bei dem Durchlauf durch den Solarkollektor wird das Solarfluid bei entsprechender Sonnenbestrahlung erwärmt. In den Solarheizkreis ist weiter ein Wärmespeicher integriert. Bei einer Inbetriebnahme der Solarheizanlage oder für Wartungszwecke muss das Solarfluid in den Solarheizkreis gefüllt werden oder auch nachgefüllt werden. Hierzu werden sogenannte Befüllstationen oder Solarbefüllstationen verwendet.

Eine Solarbefüllstation gemäß dem Stand der Technik besteht aus einer Befüllpumpe, einem Vorratsbehälter für das Solarfluid und einem Filter zur Abscheidung von Schmutzpartikeln aus dem Solarfluid. Die Befüllstation wird über Schläuche an der Solarstation in den Solarfluidkreis angeschlossen.

Bei der Inbetriebnahme, nach einer Wartung oder zum Nachfüllen wird der Solarfluidkreis mit Solarfluid befüllt und gespült, um möglichst die gesamte Luft aus dem Solarfluidkreis zu verdrängen. Durch die übliche einseitige Befüllung der Solarheizanlage mit Solarfluid kommt es beim Strömen des Solarfluids in der Fallleitung vom Solarkollektor zurück in den Vorratsbehälter zur Durchmischung des Solarfluids mit der in dem Solarfluidkreis befindlichen Luft in den Rohren des Solarfluidkreises. Dabei löst sich die Luft in der Flüssigkeit oder bildet Mikroblasen. Aufgrund der hohen Viskosität des üblicherweise als Glykol/Wassergemisch ausgebildeten Solarfluids dauert es eine relativ lange Zeitdauer, bis die in dem Solarfluid vorhandenen Blasen, welche sich beispielsweise in dem Auffangbehälter befinden, im Auffangbehälter an die Oberfläche aufsteigen und abgeschieden werden können. Neben der gesamten in dem Solarfluid gelösten Luft verbleibt auch nach der Inbetriebnahme meist noch ein großer Teil der Luft in Form von Mikroblasen in dem Solarfluid in dem Solarfluidkreis. Hinzu kommt, dass sich große Luftblasen in Luftsäcken (Hochpunkten) des Solarfluidkreises ansammeln und nicht ausgespült werden können.

Mit den Vorrichtungen und Verfahren gemäß dem Stand der Technik verbleibt Luft im Solarfluidkreis. Bei Inbetriebnahme oder nach einiger Zeit während des Betriebs und hier insbesondere nach der Ausgasung der gelösten Luft in dem Solarfluid und dem Zusammenschluss der Luft zu großen Blasen, kann der Betrieb der Solarheizanlage beeinträchtigt werden. Dabei werden große Luftblasen in dem Solarkollektor bei anlaufender Pumpe und damit einsetzendem Volumenstrom aus dem Solarkollektor in die Fallleitung verdrängt. Die senkrechte Höhe der Luftsäule muss nun zusätzlich zu den Reibungsverlusten als statischer Druck, dessen Ursache die Wassersäule in der Steigleitung ist, bei der Förderung des Solarfluids mittels der Pumpe überwunden werden. Ist der statische Druck größer als die Restfördermenge der Pumpe bricht der Volumenstrom ein und der Solarkollektor kann nicht mehr gekühlt werden. Um derartige Fehlfunktionen durch Luft im System zu erkennen und entsprechend zu vermeiden, werden gemäß dem Stand der Technik Diagnosefunktionen eingesetzt, die erst nach der Inbetriebnahme greifen können. Dazu wird heute während des Betriebs der Solarheizanlage die Temperaturdifferenz zwischen Wärmespeicher und Solarkollektor ermittelt. Wird diese Differenz zu groß - beispielsweise über 80 K - zeigt dies, dass die Solarkollektoren nicht gekühlt werden, also kein Massenfluss im Solarfluidkreis besteht, obwohl die Solarfluidkreispumpe in Betrieb sein sollte. Ursache kann dann entweder eine defekte Pumpe oder zu viel Luft in Form großer Blasen in der Solarheizanlage sein. Die Diagnose setzt eine entsprechende Einstrahlung voraus, die während der Inbetriebnahme nicht notwendigerweise vorhanden ist.

Der Erfindung liegt die Aufgabe zugrunde, eine verbesserte Vorrichtung und ein verbessertes Verfahren zur fehlerfreien Diagnose und somit sicheren Vermeidung von Luft im Solarsystem bei der Inbetriebnahme zu schaffen.

Erfindungsgemäß wird dies durch die Gegenstände mit den Merkmalen des Patentanspruches 1, des Patentanspruchs 3, des Patentanspruchs 8, des Patentanspruchs 9 und des Patentanspruchs 10 gelöst. Vorteilhafte Weiterbildungen sind den Unteransprüchen zu entnehmen.

Das erfindungsgemäße Verfahren zur Diagnose einer Luftmenge in einem mit einem Solarfluid befüllten Solarfluidkreis mit Solarkollektor, insbesondere in einem Solarfluidkreis einer Solarheizanlage, wobei das Solarfluid mittels einer regelbaren Fördereinrichtung durch eine Steigleitung und eine Fallleitung des Solarfluidkreises gefördert wird und Steigleitung und Fallleitung an einem Hochpunkt und einem Tiefpunkt miteinander verbunden sind, ist **dadurch gekennzeichnet, dass** der Beginn eines Überströmens des Solarfluids über den Hochpunkt erfasst wird und eine Drehzahl und/oder eine Leistungsaufnahme der Fördereinrichtung erfasst und in Bezug auf ihre Restförderhöhe ausgewertet wird, um aus der zum Erzeugen des beginnenden Überströmens erforderlichen Drehzahl und/oder Leistungsaufnahme die in dem Solarfluidkreis vorhandene Luftmenge zu diagnostizieren.

In einer Ausführungsform des erfindungsgemäßen Verfahrens ist vorgesehen, dass das Erfassen des Solarfluidstroms ein Erfassen einer Solarkollektortemperaturveränderung umfasst.

Das erfindungsgemäße Verfahren zum Betreiben einer Solarheizanlage, bei welcher ein durch einen Solarfluidkreis mittels einer Fördereinrichtung gefördertes Solarfluid über mindestens einen Solarkollektor erwärmt wird, ist **dadurch gekennzeichnet, dass** ein erfindungsgemäßes Verfahren zur Diagnose einer Luftmenge durchgeführt wird, um Fehlfunktionen durch Lufteinschlüsse beim Betrieb zu erkennen und entsprechend zu vermeiden.

In einer Ausführungsform der vorliegenden Erfindung ist vorgesehen, dass das Verfahren zur Diagnose vor und/oder während einer Inbetriebnahme und/oder während eines regulären Betriebs der Solarheizanlage durchgeführt wird.

In einer anderen Ausführungsform der vorliegenden Erfindung ist vorgesehen, dass bei einem Befüllen eines zumindest teilweise unbefüllten Solarfluidkreises das Solarfluid vortemperiert wird, um einen Eintrag an Luft in den Solarfluidkreis durch Luftblasen im Solarfluid beim Befüllen zu verringern oder zu vermeiden.

Noch eine weitere Ausführungsform der vorliegenden Erfindung sieht vor, dass bei dem Befüllen ein Einströmen und/oder eine Temperatur des Solarfluids in Abhängigkeit von einer Solarkollektortemperatur über ein Regeln der Fördereinrichtung und/oder einer Temperiereinrichtung zum Temperieren des in einem Vorratsbehälter bevorrateten Solarfluids eingestellt wird, um eine Luftmengenansammlung in dem Solarfluidkreis zu vermeiden.

Wiederum eine andere Ausführungsform der vorliegenden Erfindung sieht vor, dass die Fördereinrichtung zum Diagnostizieren der im Solarfluidkreis vorhandenen Luftmenge mit niedriger Drehzahl und/oder niedriger Leistungsaufnahme anläuft und langsam zu höheren Drehzahlen und/oder höherer Leistungsaufnahme übergeht.

Die erfindungsgemäße Vorrichtung zur Diagnose einer Luftmenge in einem mit einem Solarfluid befüllten Solarfluidkreis mit Solarkollektor insbesondere in einem Solarfluidkreis einer Solarheizanlage, und mit einer regelbaren Fördereinrichtung, um das Solarfluid durch eine Steigleitung und eine Fallleitung des Solarfluidkreises zu fördern, wobei Steigleitung und Fallleitung an einem Hochpunkt und einem Tiefpunkt miteinander verbunden sind, ist **dadurch gekennzeichnet, dass** eine Erfassungseinrichtung zum Erfassen des Beginns eines Überströmens des Solarfluids über den Hochpunkt und eine Diagnoseeinrichtung mit einer Messeinheit für eine Drehzahl und/oder eine Leistungsaufnahme der Fördereinrichtung sowie einer Auswerteeinheit, um die Drehzahl und/oder Leistungsaufnahme in Bezug auf ihre Restförderhöhe auszuwerten, wobei aus der zum Erzeugen des beginnenden Überströmens erforderlichen Drehzahl und/oder Leistungsaufnahme die in dem Solarfluidkreis (K) vorhandene Luftmenge diagnostizierbar ist, vorgesehen sind.

Die erfindungsgemäße Vorrichtung zum Befüllen einer Solarheizanlage, bei welcher ein durch einen Solarfluidkreis mittels einer Fördereinrichtung gefördertes Solarfluid über mindestens einen Solarkollektor erwärmt wird, umfassend einen Vorratsbehälter zum Bevorraten des Solarfluids und die Fördereinrichtung zum Fördern des Solarfluids, ist **dadurch gekennzeichnet, dass** eine erfindungsgemäße Vorrichtung zur Diagnose und eine Temperiereinrichtung zum Temperieren des bevorrateten Solarfluids vorgesehen ist, um das Solarfluid auf eine vorbestimmte Temperatur zu temperieren.

Die erfindungsgemäße Solarheizanlage, bei welcher ein durch einen Solarfluidkreis mittels einer Fördereinrichtung gefördertes Solarfluid über mindestens einen Solarkollektor erwärmt wird, ist **dadurch gekennzeichnet, dass** eine erfindungsgemäße Vorrichtung zur Diagnose und/oder eine ankoppelbare erfindungsgemäße Vorrichtung zum Befüllen vorgesehen ist/sind, um Fehlfunktionen durch Lufteinschlüsse beim Betrieb zu erkennen und entsprechend zu vermeiden.

Mit dem erfindungsgemäßen Verfahren und der erfindungsgemäßen Vorrichtung werden insbesondere die folgenden Vorteile realisiert:

Mit der vorliegenden Erfindung kann effektiv das Vorhandensein von Luft oder Lufteinschlüssen in Leitungen eines Solarfluidkreises vor und/oder während der Inbetriebnahme sowie während des Betriebes diagnostiziert werden. Die Diagnose lässt sich ohne Bilden einer Temperatur an mehreren Stellen des Solarfluidkreises realisieren. Es lässt sich eine einwandfreie Diagnose durchführen. Durch eine Erweiterung der Solarbefüllstation um ein Heizelement, einen Temperatursensor und eine Steuerungselektronik mit Inbetriebnahme- und Diagnosefunktionen lässt sich die Erfindung auf einfache Weise realisieren. Durch das zusätzliche Heizelement kann das Solarfluid vor dem Einfüllen in den Solarfluidkreis erwärmt werden. Dies hat zwei Vorteile. Erstens wird bei einer Erwärmung dem Solarfluid auf beispielsweise über 80°C das Lösungsgleichgewicht der Luft soweit verringert, dass bei der Befüllung kaum Luft in dem Solarfluid absorbiert wird. Durch die Erwärmung kann zusätzlich ein definiertes Sprungsignal für Diagnosefunktionen bei der Inbetriebnahme des Solarfluidkreises generiert werden. Mit dem definierten Temperatursprung wird der Volumenstrom durch den Solarfluidkreis mit Hilfe des Temperaturfühlers am Solarkollektor einwandfrei direkt bei der Inbetriebnahme erkannt. Diese Information kann in Verbindung mit der Diagnosefunktion dazu eingesetzt werden, die Menge der im Solarfluidkreis verbliebenen Luft zu diagnostizieren.

Die Zeichnung stellt ein Ausführungsbeispiel der Erfindung dar und zeigt in den Figuren:
- Fig. 1: schematisch den Aufbau einer erfindungsgemäßen Solarheizanlage mit einer Vorrichtung zum Befüllen der Solarheizanlage.
- Fig.2: ein Diagramm, welches den Zusammenhang zwischen Massenstrom, Förderhöhe und Pumpenstufe verdeutlicht.
- Fig. 3: ein Diagramm, welches die Zusammenhänge zwischen Temperaturveränderung des Solarfluids, Pumpenstufe und Massenstrom verdeutlicht.

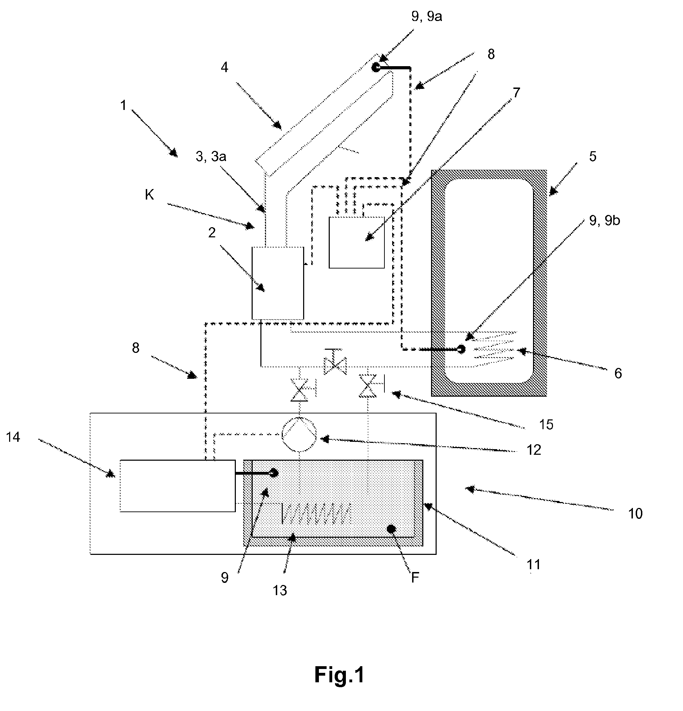

Fig. 1 zeigt schematisch den Aufbau einer erfindungsgemäßen Solarheizanlage 1 mit einer Vorrichtung 10 zum Befüllen der Solarheizanlage 1. Die Solarheizanlage 1 umfasst einen Solarfluidkreis K, in welchem eine Solarstation 2, Leitungen 3, ein Solarkollektor 4 und ein Wärmespeicher 5 umfasst sind. In dem Solarfluidkreis K zirkuliert ein Solarfluid F, welches durch eine Fördereinrichtung 12, die auch in den Solarfluidkreis K integriert sein kann, durch den Solarfluidkreis K gefördert wird. Das zirkulierende Solarfluid F wird in dem Solarkollektor 4 bei Sonneneinstrahlung erwärmt und gibt diese Wärme über einen Wärmetauscher 6 an ein Wärmeträgerfluid, welches sich in dem Wärmespeicher 5 befindet, ab. Um die Solarheizanlage 1 und insbesondere den Solarfluidfluss und die Wärmeübertragung zu regeln, weist die Solarheizanlage 1 weiter einen Solarregler 7 auf. Der Solarregler 7 ist über Datenleitungen 8 mit der Solarstation 2 und mit Temperatursensoren 9 an dem Solarkollektor 4 und dem Wärmespeicher 5 gekoppelt. Der Solarkollektortemperatursensor 9a leitet über ein Signal den Temperaturwert in dem Solarkollektor 4 an den Solarregler 7 weiter. Entsprechend leitet der Wärmespeichertemperatursensor 9b den Temperaturwert in dem Wärmespeicher 5 an den Solarregler 7 weiter.

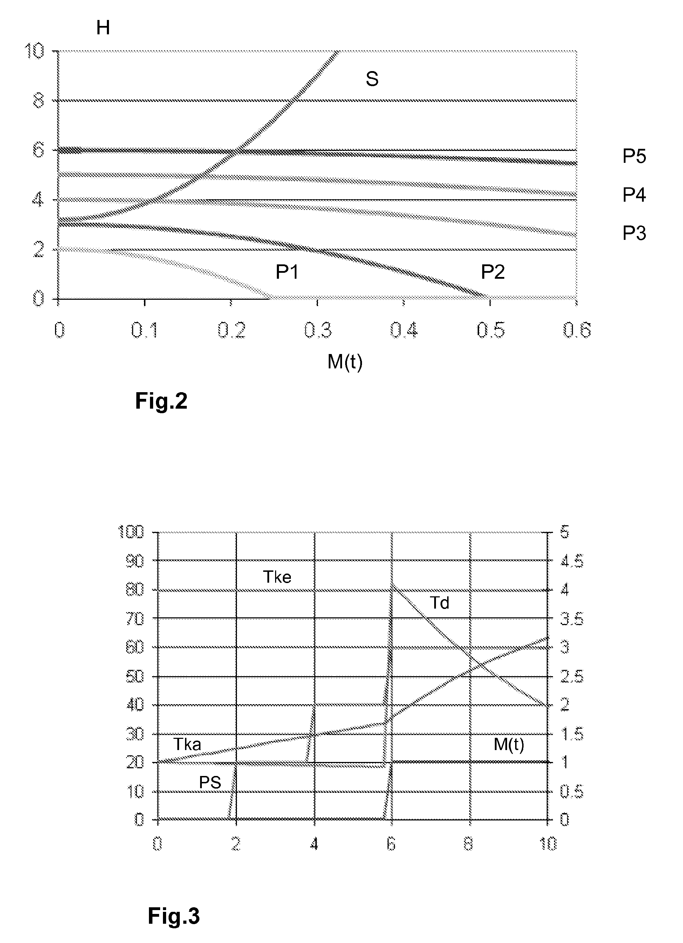

Die Vorrichtung 10 zum Befüllen der Solarheizanlage 1 umfasst einen Vorratsbehälter 11 zum Bevorraten des Solarfluids F und eine Fördereinrichtung 12 zum Fördern des Solarfluids F durch den Solarfluidkreis K. Weiter umfasst die Vorrichtung 10 eine Temperiereinrichtung 13 zum Temperieren, insbesondere zum Heizen, des in dem Vorratsbehälter 11 bevorrateten Solarfluids F. Zum Betrieb der Vorrichtung 10 ist weiter eine Steuerung 14 mit entsprechender Steuerelektronik vorgesehen. Die Steuerung 14 ist über eine entsprechende Datenleitung 8 mit dem Solarregler 7 gekoppelt. Um die Vorrichtung 10 an den Solarheizkreis K fluidisch anzubinden, sind entsprechende Ventile 15 vorgesehen, mit welchen sich die entsprechenden Leitungsabschnitte verbinden oder trennen lassen. Das Solarfluid F wird durch eine Steigleitung 3a und eine Fallleitung 3b des Solarfluidkreis K gefördert, wobei die Steigleitung 3a und die Fallleitung 3b an einem Hochpunkt und einem Tiefpunkt miteinander verbunden sind. Um die Luftmenge in dem mit dem Solarfluid F befüllten Solarfluidkreis K zu diagnostizieren, wird der Beginn eines Überströmens des Solarfluids F über den Hochpunkt und eine Drehzahl und/oder eine Leistungsaufnahme der Fördereinrichtung 12 erfasst und in Bezug auf ihre Restförderhöhe ausgewertet, um aus der zum Erzeugen des beginnenden Überströmens erforderlichen Drehzahl und/oder Leistungsaufnahme die in dem Solarfluidkreis K vorhandene Luftmenge zu diagnostizieren. Das Erfassen des Solarfluidstroms wird durch ein Erfassen der Solarkollektortemperaturveränderung durchgeführt. Da das Solarfluid F erwärmt in den Solarfluidkreis K eingefüllt wird, ist die Solarkollektortemperaturveränderung auf einfache Weise erfassbar. Das Befüllen, genauer das Einströmen und/oder eine Temperatur des zugeführten Solarfluids F erfolgt in Abhängigkeit von der Solarkollektortemperatur über ein Regeln der Fördereinrichtung 12 und/oder einer Temperiereinrichtung 13 zum Temperieren des in dem Vorratsbehälter 11 bevorrateten Solarfluids F. Die Fördereinrichtung 12 läuft dabei zum Diagnostizieren der im Solarfluidkreis K vorhandenen Luftmenge mit niedriger Drehzahl und/oder niedriger Leistungsaufnahme an und geht langsam zu höheren Drehzahlen und/oder höherer Leistungsaufnahme über. Das Prinzip, nach welchem hieraus auf das Vorhandensein von Luft oder Lufteinschlüssen in den Leitungen 3 geschlossen wird, ist anhand der Diagramme nach Fig. 2 und Fig. 3 erkennbar.

Fig. 2 zeigt ein Diagramm, welches den Zusammenhang zwischen Massenstrom, Förderhöhe und Pumpenstufe verdeutlicht. Auf der Abszisse ist der Massenstrom M(t) des Solarfluids F in m³/h aufgetragen. Auf der Ordinate ist die Förderhöhe der als Förderpumpe ausgebildeten Fördereinrichtung 12 in m aufgetragen. Die mit S bezeichnete Kurve stellt eine Kennlinie des Systems, das heißt der Solarheizanlage 1 dar. Diese Linie lässt sich anhand der Leitungen 3 des Systems und dergleichen berechnen. Die anderen Linien P1 bis P5 stellen jeweils die Restförderhöhe H über den Massenstrom M(t) für verschiedene Pumpenstufen der Förderpumpe dar. Die Linien P1 und P2, das heißt die Pumpenstufen 1 und 2, weisen jeweils einen Verlauf auf, der die Systemkurve S nicht schneidet. Bei diesen Pumpenstufen erfolgt keine Förderung durch den Solarkollektor 4, das heißt, die Pumpenleistung reicht nicht aus, um ein Solarfluidstrom zu realisieren. Die Linie P3 der Pumpenstufe 3 schneidet bei einem Wert zwischen 0,1 und 0,2 auf der M(t)-Achse die Systemlinie S, das heißt, es setzt bei der Pumpenstufe 3 ein Massenstrom ein. Die Linien P4 und P5 weisen ebenfalls jeweils einen Schnittpunkt mit der Systemlinie S auf, der sich aufgrund der höheren Pumpenleistung immer weiter nach rechts, das heißt hin zu höheren Massenstromwerten, verschiebt.

Fig. 3 zeigt ein Diagramm, welches die Zusammenhänge zwischen Temperaturveränderung des Solarfluids, Pumpenstufe und Massenstrom verdeutlicht. Auf der Abszisse ist die Zeit t in Minuten aufgetragen, auf der Ordinate links ist die Temperatur T in °C bzw. der Massenstrom in m³/h aufgetragen, auf der rechten y-Achse ist Pumpenstufe bzw. die relative Änderungsgeschwindigkeit der Temperaturdifferenz entsprechend der jeweiligen Kurve eingetragen.

Die Linie Tke repräsentiert die Eingangstemperatur des Solarfluids F am Solarkollektor 4. Diese Temperatur entspricht in einer hier vorgenommenen Näherung der Temperatur des Solarfluids F im Vorratsbehälter. Die Temperatur Tke verläuft konstant bei etwa 80°C. Die Linie M(t) stellt den Massenstrom dar. Sie verläuft bis zu einem Wert von fast 6 Minuten konstant bei 0, das heißt es fließt kein Solarfluid F. Bei etwa 6 Minuten steigt die Linie M(t) sprunghaft auf einen Wert 20, der hier stellvertretend für einen Massenstrom steht. Mit anderen Worten, nach etwa knapp 6 Minuten findet ein Massenstrom statt.

Die Linie PS stellt die jeweilige Pumpenstufe dar. Die Förderpumpe wird von niedrigen Leistungswerten hin zu höheren Leistungswerten betrieben. Das heißt etwa die ersten zwei Minuten wird die Förderpumpe auf der untersten Pumpenstufe betrieben. Dann wird die Förderpumpe bei etwa zwei Minuten auf der Pumpenstufe 1 betrieben, was durch den sprunghaften Anstieg dargestellt ist. Die Pumpe wird wieder etwa für zwei Minuten auf der Pumpenstufe 1 betrieben. Es findet hier noch kein Massenstrom M(t) statt. Dann wird die Pumpe auf Pumpenstufe 2 betrieben, was durch den sprunghaften Anstieg der Linie PS bei etwa 4 Minuten dargestellt ist. Für etwa 2 Minuten wird die Pumpe auf dieser Pumpenstufe betrieben. Es findet hier ebenfalls noch kein Massenstrom M(t) statt. Bei etwa 6 Minuten wird auf die nächste Pumpenstufe 3 geschaltet. Mit dem Betrieb auf Pumpenstufe 3 findet auch ein Massenstrom M(t) statt. Die Pumpe wird auf der Pumpenstufe weiter betrieben.

Die Linie Td stellt die Temperaturdifferenz zwischen Vorratsgefäß 11 und Solarkollektorausgang dar. Die Temperaturdifferenz beträgt für die ersten 6 Minuten etwa 20°, das heißt bis zu einem Einsetzen eines Massenstroms. Bei Einsetzen des Massenstroms M(t) bei etwa sechs Minuten ändert sich die Temperaturdifferenz in kurzer Zeit auf etwa 80°, das heißt, das erwärmte Solarfluid F strömt durch den Solarkollektor 4. Danach sinkt die Temperaturdifferenz ab, bis sie in Richtung langer Zeiten wieder den ursprünglichen, systembedingten Temperaturdifferenzwert von 20° annimmt. Die Linie Tka repräsentiert die Kollektoraustrittstemperatur. Die Linie steigt von t=0 bei 20°C etwa linear bis t gleich etwa 6 Minuten, das heißt bis zum Eintreten des Massenstroms, auf etwa 34°C an. Bei Einsetzen des Massenstroms steigt die Kollektoraustrittstemperatur Tka beginnend mit einer Knickstelle stärker an und nähert sich in einem Kurvenverlauf der Temperatur 80°C bei ausreichend langer Laufzeit t.

Der Erfindung ist im Folgenden zusammengefasst beschrieben:

Die erfindungsgemäße Vorrichtung 10, die auch als Solarbefüllstation bezeichnet wird, weist gegenüber dem Stand der Technik zusätzlich eine Temperiereinrichtung 13 zum Temperieren des in den Solarfluidkreis K strömenden Solarfluids F auf. Die Temperiereinrichtung 13 kann z. B. als ein Tauchsieder in dem Vorratsbehälter 11 sein. Der Vorratsbehälter 11 ist so ausgebildet, dass die bei der Erwärmung des Solarfluids F desorbierte Luft entweichen kann. Die Temperatur des Solarfluids F wird über eine entsprechende Regelung mit Temperatursensor 9 eingestellt, deren Steuerungselektronik auch zur Durchführung der Diagnosefunktionen eingesetzt wird. Diese Steuerungselektronik steuert zum Beispiel die Drehzahl der als Befüllpumpe ausgebildeten Fördereinrichtung 12 und/oder die Leistung der Temperiereinrichtung 13. Durch eine Verbindung zum Solarregler 7 stehen außerdem die Messwerte der Solarkollektor- und der Wärmespeichertemperatur für Diagnosefunktionen zur Verfügung. Zunächst wird durch die Auswertung der Sensorsignale die Solarheizanlage 1 optimal befüllt. Der Volumenstrom wird dazu automatisch über die Drehzahl der Pumpe und die Temperatur des Solarfluids F über die Leistung der Temperiereinrichtung 13 so geregelt, dass nach der Befüllung so wenig Luft wie möglich im Solarfluidkreis K verbleibt. Das heißt, zunächst wird das Solarfluid F auf 80-90°C erwärmt, wobei die gelöste Luft aus dem Solarfluid F desorbiert wird. Anschließend wird die Solarheizanlage 1 bei kleinem Volumenstrom, zur Vermeidung von Verwirbelungen und Lufteinschlüssen, mit dem warmen Solarfluid F einseitig durch die Leitung 3, die von der Befüllstation zum Solarkollektor 4 führt, gefüllt. Der Vorratsbehälter 11 wird weiterhin temperiert, damit das im Solarfluidkreis K abgekühlte Solarfluid F vor dem Wiedereintritt in den Solarfluidkreis K auf Solltemperatur gebracht wird. Nach dem anschließenden Spülen des Solarfluidkreises K mit hohem Volumenstrom ist keine oder sind nur minimale Mengen an Luft im System.

Die Diagnose kann entweder mit der oben beschriebenen angeschlossenen Solarbefüllstation bei der Inbetriebnahme oder während des Betriebs durch eine regelbare Solarfluidkreispumpe durchgeführt werden. Ausgehend von einer kleinen Drehzahlstufe der Pumpe wird die Drehzahl schrittweise erhöht. Anhand des Temperatursignals des Solarkollektorfühlers 9a wird ermittelt, ab welcher Drehzahl ein Volumenstrom durch den Solarfluidkreis K einsetzt. Über die Restförderhöhe bei der ermittelten Pumpenstufe kann die Höhe der der senkrechten Luftsäule, und damit bedingt das Luftvolumen im System bestimmt werden. Über die beheizte Befüllstation wird eine konstante Solarkollektoreintrittstemperatur eingestellt. Um durch den Verlauf des Solarkollektorfühlers 9a während des Diagnoseprogramms den einsetzenden Massenstrom sicher diagnostizieren zu können, ist eine definierte Eintrittstemperatur Tke in dem Solarkollektor 4 eingestellt. Um eine Änderung der Solarkollektortemperatur Tke durch einen Volumenstrom zu erzeugen, ist es erforderlich, dass der Solarkollektor 4 und das Solarfluid F an der Befüllstation bei Start der Diagnose eine ausreichend große Temperaturdifferenz Td aufweisen. Nach der Befüllung des Solarfluidkreises K mit dem erwärmten Solarfluid F wird dazu bei abgeschalteter Pumpe solange gewartet, bis der Solarkollektor 4 ausgekühlt ist. Dann wird zu Beginn der Diagnose bei abgeschalteter Pumpe die aktuelle Ableitung der Differenz aus Solarkollektortemperatur und Temperatur im Vorratsbehälter 11 bzw. Wärmespeicher 5 ermittelt. Dazu wird als Referenz angenommen, dass die Ableitung für die kurze Zeit der Diagnose konstant ist. Ändert sich bei nachfolgendem Pumpenbetrieb und schrittweise Erhöhung der Drehzahl die Ableitung maßgeblich gegenüber der Referenz, kann damit auf einen Volumenstrom im Solarfluidkreis K geschlossen werden. Dieses Verfahren kann auch während des Betriebs der Solarheizanlage 1 mit der verbliebenen regelbaren Solarfluidkreispumpe durchgeführt werden. Dafür ist es erforderlich, einen Zustand abzuwarten, bei dem die Temperaturdifferenz Td zwischen Wärmespeicher 5 und Solarkollektor 4 ausreichend groß ist. Dies ist zum Beispiel nachts der Fall, wenn der Wärmespeicher 5 warm und der Solarkollektor 4 kalt ist. Dieser Zeitpunkt hat den Vorteil, dass durch den Ausschluss der Solarstrahlung ein Temperatursprung eindeutig auf den einsetzenden Massenstrom zurückgeführt werden kann.

## Patentansprüche

1. Verfahren zur Diagnose einer Luftmenge in einem mit einem Solarfluid (F) befüllten Solarfluidkreis (K) mit Solarkollektor (4), insbesondere in einem Solarfluidkreis (K) einer Solarheizanlage (1), wobei das Solarfluid (F) mittels einer regelbaren Fördereinrichtung (12) durch eine Steigleitung (3a) und eine Fallleitung (3b) des Solarfluidkreises (K) gefördert wird und Steigleitung und Fallleitung an einem Hochpunkt und einem Tiefpunkt miteinander verbunden sind,
**dadurch gekennzeichnet, dass** der Beginn eines Überströmens des Solarfluids (F) über den Hochpunkt erfasst wird und eine Drehzahl und/oder eine Leistungsaufnahme der Fördereinrichtung (12) erfasst und in Bezug auf ihre Restförderhöhe ausgewertet wird, um aus der zum Erzeugen des beginnenden Überströmens erforderlichen Drehzahl und/oder Leistungsaufnahme die in dem Solarfluidkreis (K) vorhandene Luftmenge zu diagnostizieren.

2. Verfahren nach Anspruch 1,
**dadurch gekennzeichnet, dass** das Erfassen des Solarfluidstroms ein Erfassen einer Solarkollektortemperaturveränderung umfasst.

3. Verfahren zum Betreiben einer Solarheizanlage (1), bei welcher ein durch einen Solarfluidkreis (K) mittels einer Fördereinrichtung (12) gefördertes Solarfluid (F) über mindestens einen Solarkollektor (4) erwärmt wird,
**dadurch gekennzeichnet, dass** ein Verfahren zur Diagnose einer Luftmenge nach einem der vorherigen Ansprüche 1 bis 3 durchgeführt wird, um Fehlfunktionen durch Lufteinschlüsse beim Betrieb zu erkennen und entsprechend zu vermeiden.

4. Verfahren nach Anspruch 3,
**dadurch gekennzeichnet, dass** das Verfahren zur Diagnose vor und/oder während einer Inbetriebnahme und/oder während eines regulären Betriebs der Solarheizanlage durchgeführt wird.

5. Verfahren nach Anspruch 3 oder 4,
**dadurch gekennzeichnet, dass** bei einem Befüllen eines zumindest teilweise unbefüllten Solarfluidkreises (K) das Solarfluid (F) vortemperiert wird, um einen Eintrag an Luft in den Solarfluidkreis (K) durch Luftblasen im Solarfluid (F) beim Befüllen zu verringern oder zu vermeiden.

6. Verfahren nach einem der vorherigen Ansprüche 3 bis 5,
**dadurch gekennzeichnet, dass** bei dem Befüllen ein Einströmen und/oder eine Temperatur des Solarfluids (F) in Abhängigkeit von einer Solarkollektortemperatur über ein Regeln der Fördereinrichtung (12) und/oder einer Temperiereinrichtung (13) zum Temperieren des in einem Vorratsbehälter (11) bevorrateten Solarfluids (F) eingestellt wird, um eine Luftmengenansammlung in dem Solarfluidkreis (K) zu vermeiden.

7. Verfahren nach einem der vorherigen Ansprüche 3 bis 6,
**dadurch gekennzeichnet, dass** die Fördereinrichtung (12) zum Diagnostizieren der im Solarfluidkreis (K) vorhandenen Luftmenge mit niedriger Drehzahl und/oder niedriger Leistungsaufnahme anläuft und langsam zu höheren Drehzahlen und/oder höherer Leistungsaufnahme übergeht.

8. Vorrichtung zur Diagnose einer Luftmenge in einem mit einem Solarfluid (F) befüllten Solarfluidkreis (K) mit Solarkollektor (4) insbesondere in einem Solarfluidkreis (K) einer Solarheizanlage (1), und mit einer regelbaren Fördereinrichtung (12), um das Solarfluid (F) durch eine Steigleitung (3a) und eine Fallleitung (3b) des Solarfluidkreises (K) zu fördern, wobei Steigleitung und Fallleitung an einem Hochpunkt und einem Tiefpunkt miteinander verbunden sind,
**dadurch gekennzeichnet, dass** eine Erfassungseinrichtung zum Erfassen des Beginns eines Überströmens des Solarfluids über den Hochpunkt und eine Diagnoseeinrichtung mit einer Messeinheit für eine Drehzahl und/oder eine Leistungsaufnahme der Fördereinrichtung (12) sowie einer Auswerteeinheit, um die Drehzahl und/oder Leistungsaufnahme in Bezug auf ihre Restförderhöhe auszuwerten, wobei aus der zum Erzeugen des beginnenden Überströmens erforderlichen Drehzahl und/oder Leistungsaufnahme die in dem Solarfluidkreis (K) vorhandene Luftmenge diagnostizierbar ist, vorgesehen sind.

9. Vorrichtung (10) zum Befüllen einer Solarheizanlage (1), bei welcher ein durch einen Solarfluidkreis (K) mittels einer Fördereinrichtung (12) gefördertes Solarfluid (F) über mindestens einen Solarkollektor (4) erwärmt wird, umfassend einen Vorratsbehälter (11) zum Bevorraten des Solarfluids (F) und die Fördereinrichtung (12) zum Fördern des Solarfluids (F),
**dadurch gekennzeichnet, dass** eine Vorrichtung zur Diagnose nach Anspruch 8 und eine Temperiereinrichtung (13) zum Temperieren des bevorrateten Solarfluids (F) vorgesehen ist, um das Solarfluid (F) auf eine vorbestimmte Temperatur zu temperieren.

10. Solarheizanlage (1), bei welcher ein durch einen Solarfluidkreis (K) mittels einer Fördereinrichtung (12) gefördertes Solarfluid (F) über mindestens einen Solarkollektor (4) erwärmt wird,
**dadurch gekennzeichnet, dass** eine Vorrichtung (10) zur Diagnose nach Anspruch 8 und/oder eine ankoppelbare Vorrichtung (10) zum Befüllen nach Anspruch 9 vorgesehen ist/sind, um Fehlfunktionen durch Lufteinschlüsse beim Betrieb zu erkennen und entsprechend zu vermeiden.
